Europäisches Patentamt

European Patent Office

Office européen des brevets

(19)

(11) Publication number:

**0 163 801**
**A1**

(12) **EUROPEAN PATENT APPLICATION**

(21) Application number: **84830213.9**

(22) Date of filing: **13.07.84**

(51) Int. Cl.⁴: **F 24 J 2/12, F 24 J 2/38**

(30) Priority: **05.08.83 IT 4882183**

(43) Date of publication of application: **11.12.85**
**Bulletin 35/50**

(84) Designated Contracting States: **CH DE FR GB LI**

(71) Applicant: **Farina, Giuseppe, Viale Cesare Pavese n.61,**
**I-00144 Roma (IT)**

(72) Inventor: **Farina, Giuseppe, Viale Cesare Pavese n.61,**
**I-00144 Roma (IT)**

(54) **Machinery for the conversion of solar energy into electrical or mechanical energy.**

(57) The machinery consists of a paraboloid concentrator (c) with trapeziform sectors which is mounted onto a mobile structure, supported by three pedestals, which follows the apparent motion of the sun: from East to West, through a circular section (t) connected to the vertex (o) of the concentrator (c) perpendicularly to the earth's axis (en) (es); while the synchronization to the solar declination, $-23°\,27'$, is attained through a spirally wound biconical reel (z) or (zl). A logical control system, appropriately programmed, operates the various parts of the machinery once this has been orientated. A motor (m2) starts off the transmission system which causes the concentrator (c) to undergo a rotational displacement, from East to West, at a speed of 15° an hour. When the run is finished, the logical control system (or simply the switch (io)) reverses the direction of transmission and the concentrator (c) returns to its original position, ready to point towards the sun the next day; while the end-of-run switch (ie) is used to stop the machine. A correcting system for the solar declination, the electro-mechanical group (mb,v2,r3) spirally wound biconical reel (zl) enables the paraboloid (c) to be orientated, day by day, in order to attain the maximum capture of energy from the rays which is then concentrated onto a boiler (Ca) which is placed on the focal point of the concentrator (c).

- 1 -     0163801

Description of the industrial invention entitled
"MACHINERY FOR THE CONVERSION OF SOLAR ENERGY INTO
ELECTRIC OR MECHANICAL ENERGY" by Giuseppe FARINA,
of Italian nationality.

The solar machinery which is the subject of this invention allows one to transform solar energy into electric or mechanical energy. The machinery consists of a paraboloid concentrator (c) with trapeziform sectors which is mounted onto a mobile structure, supported by three pedestals, which follows the apparent motion of the sun: from East to West, through a circular section (t) connected to the vertex (o) of the concentrator (c) perpendicularly to the earth's axis (en) (es); while the synchronization to the solar declination, $- 23^{\circ} 27'$, is attained through a spirally wound conical reel (z) or (z1). A logical control system, appropriately programmed, operates the various parts of the machinery at certain moments. The machinery, once orientated towards the astronomical poles and synchronized according to the latitude of the area, as well as to the sun's rays, is set in motion by activating a switch placed in (pt). The motor (m2)

0163801

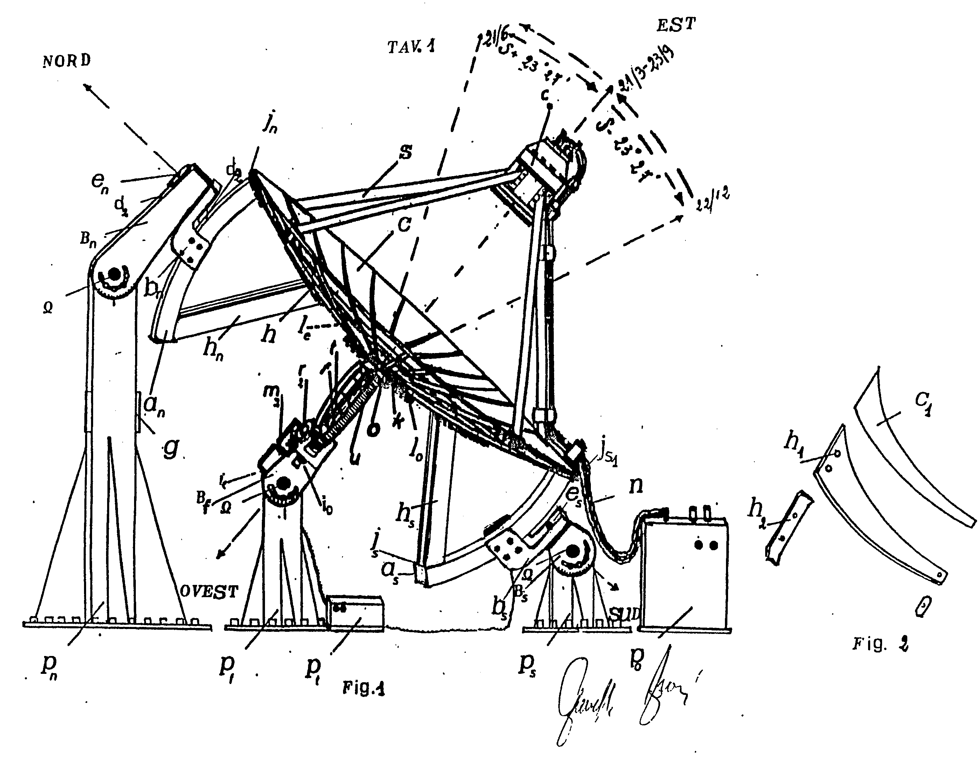

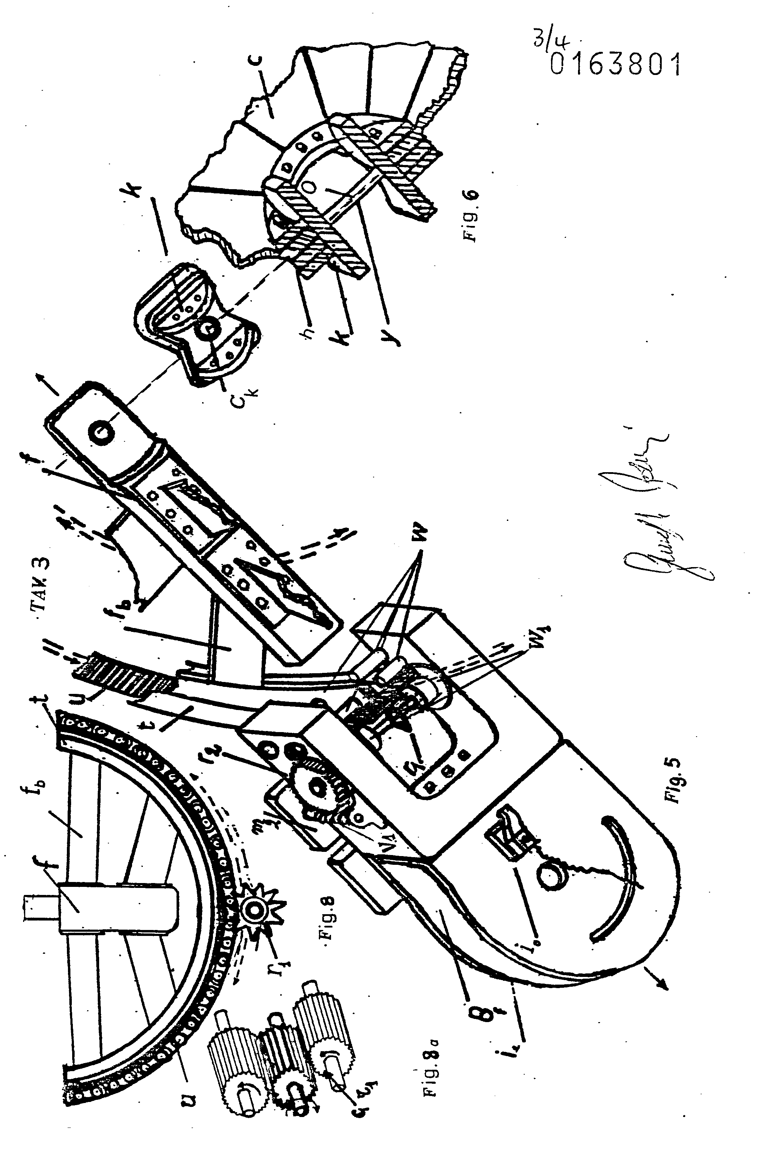

starts off the transmission system which causes the concentrator (c) to undergo a rotational displacement, from East to West, at a speed of 15° an hour. When the run is finished, the logical control system (or simply the switch (io)) reverses the direction of transmission and the concentrator (c) returns to its original position, ready to point towards the sun the next day. The switch (io) is placed in (pf) figures 1-5 and is operated using the arm (lo) which is positioned under (c); while the switch (ie) figure 5 is used for stopping the movement. As well as the above-mentioned motion, the machinery produces a further motion that synchronizes the concentrator (c) to the solar declination. In these conditions of synchronism, the solar rays converge onto the zone of focus where a boiler (Ca), or elements that make use of solar energy such as the hot air "Stirling engine" with internal focusing, is situated.

PRESENT STATE OF THE TECHNOLOGY

As far as small and medium powers are concerned, in other words up to about 500KW, there is a tendency, in the present state of the technology, to employ parabolic cylinder reflectors or paraboloid reflectors both in the production of thermal energy and in the generation of electricity. However, while the spot paraboloids are very costly, due to the difficulty in constructing and in transporting them, the parabolic cylinders are on the other hand easy to construct, but they give a **very low efficiency** and **low** temperatures. The paraboloid (c), with trapeziform elements, appears to be the optimal solution, since its cost is not very different from that of the parabolic cylinders, while its performance is noticeably improved: greater overall efficiency of the system and a higher storage temperature. The structural support of the machinery, which is different from those realized so far, allows the adoption of concentrators having any width, without any reduction in reliability as far as the synchronization with the apparent motion of the sun is concerned. Further characteristics are:

- ease in construction and in **assembling** the individual trapeziform sections;

- ease in transport, due to the fact that the surface of the concentrator may be reduced to plane sheets.

The solar machinery in question, as well as being of undoubted industrial interest, also **provides**

0163801

didactic material and gives the opportunity of improving the techniques for sighting the sun and for following it.

DESCRIPTIVE TEXT

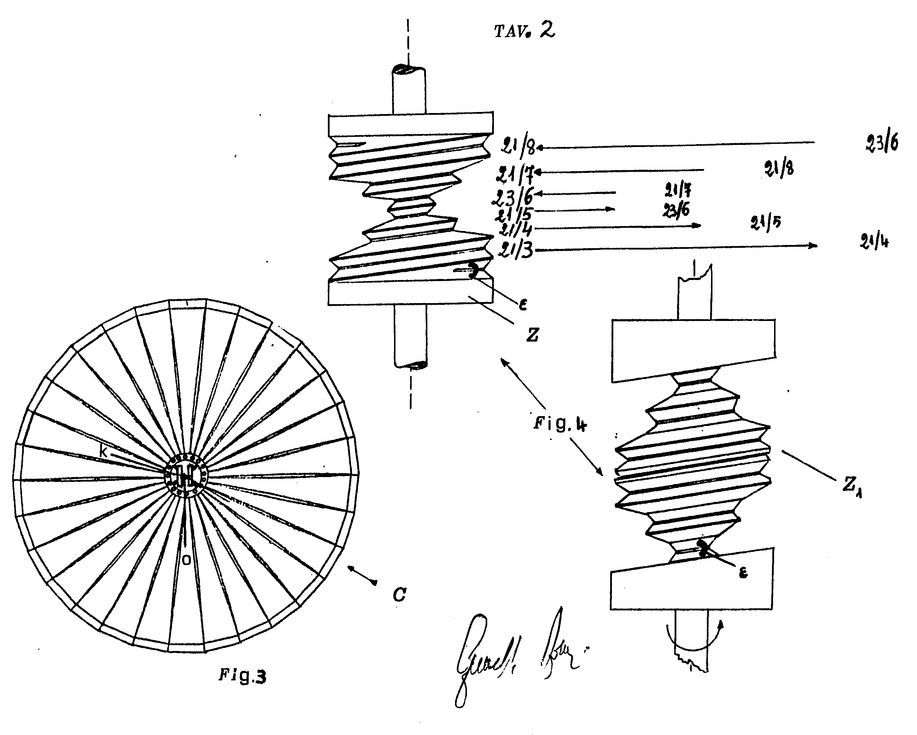

The invention is described with reference to the attached diagrams (Tables 1-2-3-4) which illustrate a particular realization of the solar machinery, whose components are: A) The proposed concentrator (c) which consists of many sections of reflecting material, of trapeziform shape (cl) table 1 figure 2, which are assembled on the load-carrying structure (h) which consists of an equal number of frames of the same shape for receiving them (hl) figure 2. A boiler (Ca) is attached by supports (s) to the focal point of the concentrator (c). On the extremities of the arms, (bn) and (bs) table 1 figure 1 and table 4 figures 7-9, which support the rollers (q), the double and parallel guides of circular section (an) (as) slide. These guides, rigidly connected to the structure of the paraboloid, have their centre at the vertex (o) of the concentrator (c). In the vertex of the concentrator (c) a structure (k) is mounted, which is composed of two flat arms parallel to the optical axis of (c) tables 2-3 figures 3-6.

The virtual segment, that joins the centres (Ck) of the arms (k), passes through the vertex of the concentrator (c) and is perpendicular to the segment (en) (es). The structure (k) is connected in a mobile way to the end of the arm (f) of the circular sector (t) table 3 - figures 8-5 through the axis (y), in such a way that the concentrator (c) is free to oscillate around its axis of rotation keeping the point (o) in a constant position in space.

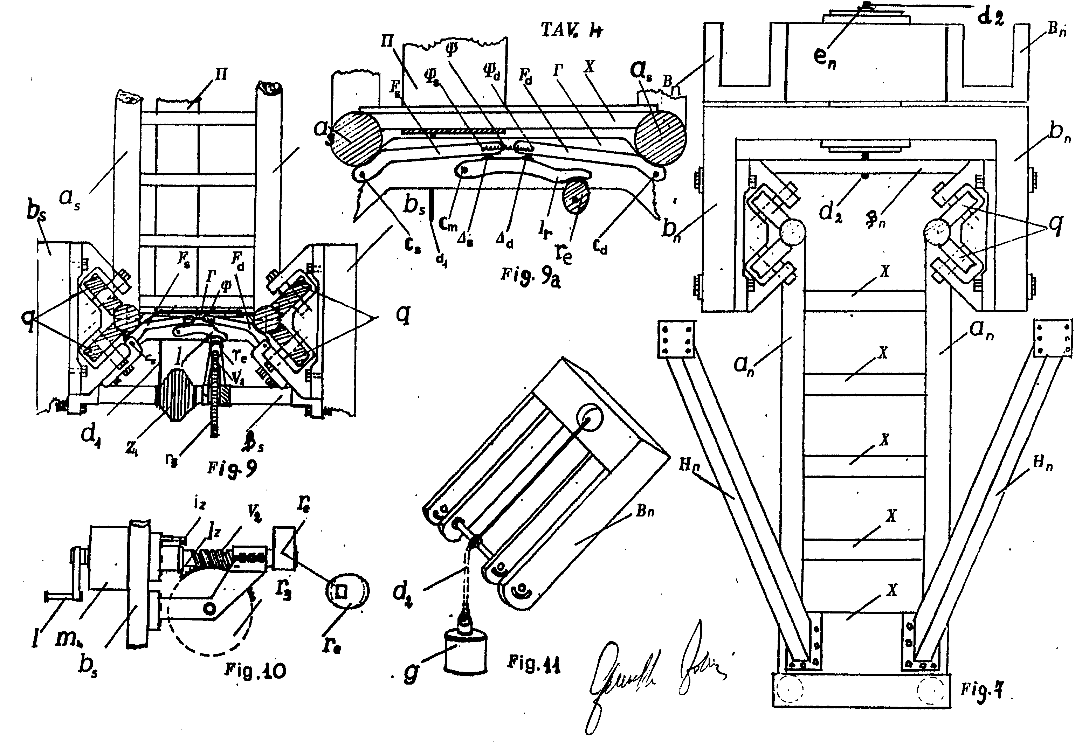

B) In the circular sector (t) table 3 figures 5-8 the arm (f), which forms one of its radii, causes with its motion rotational displacements of the paraboloid about the point (o) on a perpendicular plane to the North-South axis. The arc of the circular sector (t), an overturned "T" in section (or of different section), is passed through a pair or more than one pair of rollers (w) (wl) which are perfectly adherent to the surface of the base (t) figure 5 and on its central part, for the total length of the arc, it secures a gearing chain (u) which is coupled to the gear wheel (rl) (or in the case of an indented arc it could be coupled to the two external cylinders of the group of indented rollers Grl) figures 5-8-8a. Under these conditions

0163801

the sector (t) rotates on a plane perpendicular to the North-South line (en) (es). During the rotational motion of the circular sector (t), the boiler moves from East to West and vice versa.  C) The circular sector guides (an) (as), tables 1-4 figures 1-7-9, run along the rollers (q) of the "L"-shaped arms (Bn) (Bs) by the rotational axes of the pivots (en) (es) (lying along the North-South axis) about which they are free to rotate. The arms (Bn) (Bs) and (Bf) are supported by the pedestals (pn) (ps) and (pf) through the coupling ($\Omega$). It remains understood that the length of the pedestals depends on the latitude of the installation area thus guaranteeing the system to capture the rays from the sun from dawn until dusk. Therefore, during rotation the arms (bn) and (bs) remain on perpendicular planes to the North-South axis. The extremities of the arms (Bn) (Bs) and of the central arm (Bf) are connected to their respective pedestals by means of centre staffs ($\Omega$) around which they are free to rotate and which may be fixed, in the position necessary for orientating the structure, by means of pivots that pass through circular section slots with centre ($\Omega$). D) The position of the central fork (Bf) table 3 - figure 5, which depends on the orientational requirements of the machinery, as well as ensuring the transmission connection with the circular sector (t), guarantees the rotational motion of the same sector on a plane perpendicular to the North-South axis and which passes through the point (O) of the concentrator. The rotational motion of the circular sector (t) **is caused by** the wheel (r1), (or the two external cylinders of the group of indented rollers Gr1) table 3 figures 5-8-8a, which is controlled by the transmission **parts** formed by: the wheel (r2) and the tangent screw (v1) table 3 figure 5. On the body of the fork (Bf) the switches (io) and (ie) are placed, which are **respectively controlled by the levers (lo) (le) fixed to the paraboloid, and which are** used in order to reverse the run and then to **halt** it. E) The spirally wound double conical reel (z) or (z1) table 2 figure 4, which is connected to the interior of the section arms (bs) figure 9, has the purpose of winding or of unwinding different lengths of string (d1), at different times of the year, sufficient to cause the concentrator (c) to decline in the vertical plane. The string (d1) is connected on the one side to the point ($\mathcal{E}$) of the

reel (zl), and on the other side to the extremity (js) of the sector (as), sliding along a circular surface ($\pi$) which ensures  regular sliding tables 1-4 figures 1-9-9a. Along the axis ($\beta$s) and from the side opposite the wheel (r3) a similar reel (zl) (not shown in the figure) may be joined by mortise, whose string (not illustrated) attached to the extremity (jsl) opposite that where the string (dl) is attached, winds up in the opposite sense with respect to the latter. This two-reel system ensures, in the case of external forces (wind), that the paraboloid does not invert its sense of motion, since one or the other of the reels will become taut. The string (d2), which is attached to the point (jn) of the paraboloid, partially winds round the axis of the roller ($\beta$n) of the arm (bn) and through the hollow axis (en) of the latter its other extremity reaches the counterweight (g) figures 7-11. The reel (zl) is controlled by a tangent screw (v2) figure 9, (detail in figure 10), through the transmission wheel (r3) fixed on the axis of rotation of (zl). The transmission unit is set into motion by the electric motor reducer (m4) which is activated, preferably every day, by the logical control system.

For example, every day the axis of the motor (m4), having caused the axis (v2) to perform a complete cycle, is stopped because a switch (iz), controlled by the lever (lz) mounted on the axis (v2), stops the flow of electricity. This rotation, which occurs by means of the mechanism just described, determines a movement of the arms (bn) (bs) which causes (thanks to the position of the string (dl) in the reel (zl)) a pre-established rotation of the paraboloid (c) which in this way corrects the daily deviations of the apparent declination of the sun. To the end of the tangent screw (v2), table 4 figures 9-9a-10, an eccentric cylindrical element of elliptic cross section (re) is joined by mortise, which acts as a cam on the surface of the throat of the lever (lr) of known curvature, having some projections on its back ($\Delta$s) ($\Delta$d) and whose fulcrum is at (Cm). This curvature is calculated so that the projections on it, at the end of the run, act on the levers (Fs) (Fd), of the braking system, in such a way that these, whose fulcra are at the points (Cs) (Cd) lying along a straight line parallel to the axis ($\beta$s), rotate with the same angle, causing an equal braking effect of the respective dogs on the

0163801

cylindrical circular guides (as). Once the string (dl) has been wound up (or unwound), and thus the system has been set in the desired position, the cam element (re) places itself with its major **axis** perpendicular ($\beta$s) thus activating the lever (lr).

CLAIMS

1) Machinery for the conversion of solar energy into electric or mechanical energy, whose characteristics are: a paraboloid concentrator (c) with a surface that may be composed of trapeziform elements; a load-carrying structure for the concentrator which enables the capturing system to maintain its synchronization with the apparent motion of the sun; a circular indented section that transmits the motion from East to West and vive versa to the paraboloid; a forked arm (Bf) which includes an electromechanical transmission system for moving the circular sector (t); a biconical reel which adjusts the position of the paraboloid to the daily values of the solar declination, and a self-halting braking system.

2) PARABOLOID CONCENTRATOR (C), as in claim 1), consisting of various sections of trapeziform reflecting material (cl) table 1 figure 2 which are mounted onto an equal number of supporting frames, which are of trapeziform shape with a paraboloid curvature, and which are intended for receiving them (hl) figure 2. To the vertex of the concentrator a structure (k) is attached which consists of two arms which are flat and parallel to the optical axis of (c) and perpendicular to the North-South axis table 2 figure 3 table 3-figure 6.

3) SUPPORTING SYSTEM OF THE CONCENTRATOR (C), as in **claim** 1), which consists of two pairs of "L"-shaped arms (bn) (bs) table 1-figure 1-table 4 figures 7-9 which are in their turn connected to the arms (Bn) (Bs) through the pivots (en) (es) that lie along the North-South axis around which they are free to rotate. In the interior of the "L" arms table 4-figures 7-9, there are two pairs of rollers (q) that guide the sliding sectors (an) (as), as in claim 4).

4) DOUBLE SECTION AND PARALLEL CIRCULAR GUIDES, (an) (as) table 1-figure 1-table 4-figures 7-9, of the supporting system, as in claim 1), firmly fixed to the paraboloid's structure, with centre at the vertex (0).

5) CIRCULAR SECTOR (t) table 3 figures 5-8, as in claim 1) **onto** which, in its central external part, a gearing chain (u) is secured, coupled to the gear wheel (zl) (or an indented arc coupled to the two external cylinders of the group of indented rollers Grl) figures 5-8-8a. The extremity of the arm (f) of the circular sector (t) which coincides with the circle's centre, of which it is part, is connected in a mobile way to the vertex of the concentrator
(c) through the axis (y) table 3-figure 6.

6) FORK-SHAPED ARM (Bf), as in claim 1), table 1-
figure 1-table 3-figure 5, which consists of: a) one
or more pairs of roller guides (w) (w1) through
which the arc of the circular sector (t) passes,
such as to guarantee the regular **rotational** motion
of the very sector **along a** perpendicular plane to
the North-South axis; b) a gear wheel (r1) table 3-
figure 8 coupled to a gearing chain (u) (or a group
of indented rollers Gr1 table 3-figure 8a if its two
external elements are to be coupled to an indented
sector); c) the transmission group tables 3-1 figures 5-1 consisting of a wheel (r2) coupled to a
tangent screw (v1), and a motor reducer (m2) which
moves the sector (t) and thus the paraboloid in its
**excursion from East to West and vice versa.**

7) DOUBLE CONICAL REEL, as in claim 1), which is
spirally wound (z) (z1) table 2 figure 4 table 4-
figure 9, which is characterized by various coils
whose circumferences are pre-determined, on which
a string (d1) is wound. The reel is used for winding
**or** unwinding different lengths of string (d1),
which depend on the daily deviations of the solar

0163801

declination, in order to carry out corrective displacements to the concentrator (c) and thus ensure,
day by day, the maximum capture of the sun's rays.
The reel is controlled by a tangent screw (v2) figures 9-10, through a transmission wheel (r3) that
is fixed on the axis of the reel itself.

8) BRAKING SYSTEM, as in claim 1), which consists of
the levers (Fs) (Fd) controlled by the lever (lr) of
a certain curvature, having some projections on its
back ($\Delta$s) ($\Delta$d) table 4-figures 9-9a. The lever (lr)
is controlled by an eccentric cylindrical element
with an elliptic cross section (re) which is joined
by mortise to the end of the screw (v2). The back or
the profile of this lever (lr) is made in such a way
that its projections act upon the levers (Fs) (Fd)
of the braking system in such a way that these,
whose fulcra are at the points (Cs) (cd), lying
along a straight line parallel to the axis ($\beta$s),
will have rotated by the same angle at the end of
the run, causing an equal braking effect on the
respective dogs on the circular guides (as). When
the brake is not in action, and therefore the lever
(lr) is resting in its lowest position, the levers
(Fs) (Fd), to avoid touching the first lever, are kept in a virtually horizontal position by a spring
($\Upsilon$) whose fulcrum is situated at the points ($\Upsilon$s)
($\Upsilon$d) of the very levers. table 4-figure 9a.

Fig. 2

$C_1$   $\theta$   $h_1$   $h_2$

EST

TAV.1

$S$   $C$   $c$

$i_n$   $d_1$   $b_n$   $a_n$   $g$

$h_n$   $h$

$e_n$   $d_2$   $B_n$   $\Omega$

NORD

OVEST

$l_e$   $f$   $u$   $o$   $*$   $l_o$

$m_3$   $i_o$   $B_f$   $\Omega$

$n$   $s_1$   $j_s$   $e_s$   $a_s$   $j$   $h_s$

$q$   $B_s$   $b_s$

SUD

$p_n$   $p_l$   $p_t$   $p_s$   $P_g$

Fig.1

21/8 ← 23/6

21/8 ← 21/8

21/7 ←

23/6 → 21/7

21/5 → 23/6

21/4 21/5

21/3 → 21/4

ε

Z

Fig.4

Z₁

ε

K

O

C

Fig.3

TAV. 3

Fig. 8

Fig. 8a

Fig. 5

Fig. 6

European Patent
Office

**EUROPEAN SEARCH REPORT**

0163801

Application number

EP 84 83 0213

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 646 720 (A. POLIANSKY) <br><br> * Whole document * | 1,3,5, 6 | F 24 J 2/12 <br> F 24 J 2/38 |
| A | US-A-3 977 773 (W.M. HUBBARD) <br> * Whole document * | 1,2 | |
| A | GB-A-2 094 499 (V.C. GRANDIS) <br> * Whole document * | 1,2,5 | |
| A | PATENTS ABSTRACTS OF JAPAN, vol. 6, no. 62 (P-111)[940], 21st April 1982; & JP - A - 57 4014 (DAIMARU PURONGU K.K.) 09-01-1982 <br> * Abstract * | 1,3,5 | |
| A | US-A-4 307 711 (G.J. DOUNDOULAKIS) <br> * Figure 11 * | 1,3 | **TECHNICAL FIELDS SEARCHED (Int. Cl.4)** <br><br> F 24 J <br> G 01 C |
| A | US-A-4 390 009 (A. CONSILVIO) | | |
| A | FR-E- 307 699 (M. HIMALAYA) | | |
| A | US-A-4 363 354 (B.W. STRICKLAND) <br><br> --- -/- | | |

The present search report has been drawn up for all claims

| Place of search | Date of completion of the search | Examiner |
|---|---|---|
| THE HAGUE | 03-10-1985 | SILVIS H. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | FR-A-1 108 431  (M.G. CLOUZET) | | |
| | --- | | |
| A | DE-A-2 755 722  (H. KÖSTER) | | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 03-10-1985 | SILVIS H. |